Europäisches Patentamt

European Patent Office

Office européen des brevets

(19)

(11) **EP 1 037 415 A1**

(12) **EUROPEAN PATENT APPLICATION**

(43) Date of publication:
**20.09.2000 Bulletin 2000/38**

(51) Int. Cl.⁷: **H04B 10/17**, H01S 3/06,
G02F 1/35, G02B 6/16

(21) Application number: **00104793.5**

(22) Date of filing: **06.03.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **16.03.1999 EP 99105382**

(71) Applicant:
**PIRELLI CAVI E SISTEMI S.p.A.
20126 Milano (IT)**

(72) Inventor: **Vavassori, Paolo
24100 Bergamo (IT)**

(74) Representative:
**Giannesi, Pier Giovanni et al
Pirelli S.p.A.
Industrial Property Dept.
Viale Sarca, 222
20126 Milano (IT)**

(54) **Tunable optical filter**

(57)    Tunable optical filter, comprising an optical fibre (4) incorporating a dopant, a long-period Bragg grating (5) inscribed in the optical fibre (4), an excitation source (6) for generating an exciting radiation at an excitation wavelength of the dopant, an optical coupler (7) optically connecting the excitation source (6) to the optical fibre (4) and a device (8) for controlling the excitation source (6), for controlling the power of the exciting radiation.

Fig. 1

## Description

The present invention relates to a tunable optical filter, formed in an optical fibre and usable for optical communications.

Non-linear effects in optical fibres have been studied previously in an intensive way for the purpose of producing "fast" devices for signal processing, with response times shorter than the duration of the single signal bit (for example, less than 50 ps for transmission at a "bit rate" of 10 Gb/s). The object of the development of these devices is the production of all-optical networks, in other words networks in which not only transmission but also the functions of switching and signal addressing are implemented by devices of the optical type. In addition to the great interest shown in "fast" non-linear devices, a considerable amount of research and development activity has recently been directed towards "slow" non-linear devices, characterized by response times of the order of a few milliseconds. "Slow" devices can be used as routers to produce easily reconfigurable optical networks, or as variable attenuators or tunable filters for signal processing in advanced optical transmission systems, such as wavelength multiplexing systems having the functions of insertion and extraction ("add/drop") of channels.

In order to obtain changes in the transmission characteristics in non-linear optical fibre devices, changes in the refractive index are caused by supplying an electromagnetic radiation having a predetermined power and wavelength to the fibre. This is because it is known that it is possible, by suitably selecting the power and wavelength of this electromagnetic radiation, to change the refractive index in a controlled way, and therefore to change the optical path of the signals passing through the fibre.

Glasses in general, and therefore also the silica glasses normally used for making optical fibres, have properties of symmetry such that the changes in refractive index can be obtained only by using third-order non-linear effects (such as the generation of a third harmonic, the optical Kerr effect, "self-phase modulation", and "cross-phase modulation"). Third-order non-linear effects are particularly advantageous for carrying out optical signal processing functions, since they are manifested very rapidly and introduce relatively low attenuation. However, in germanium-silica fibres used in optical transmission, third-order non-linear effects are associated with a coefficient of non-linearity $n_2$ (defined, for example, in Govind P. Agrawal, Nonlinear Fiber Optics, Academic Press) which is very small (typically approximately $3 \cdot 10^{-20} m^2/W$). Consequently, very high optical power densities and/or high interaction lengths are required to obtain adequate phase delays for making devices for optical transmission.

An alternative way of obtaining the aforesaid changes in the refractive index consists in the use of the phenomenon of "resonant non-linearity", described for example in R.H. Pantell, M.J.F. Digonnet, R.W. Sadowski and H.J. Shaw, "Analysis of Nonlinear Optical Switching in an Erbium-Doped Fiber", J. Lightwave Technology, vol. 11, no. 9, September 1993, pp. 1416-1424. The phenomenon of "resonant non-linearity" can be produced in a suitably doped optical fibre, by exciting the atoms of the dopant in such a way as to change the population of the electron energy levels of the dopant. This change in population causes a change in the absorption spectrum of the dopant, which is associated, in accordance with the Kramers-Kronig relation (described, for example, in R.H. Pantell and H.E. Puthoff, "Fundamentals of Quantum Electronics", John Wiley & Sons, New York, 1969), with a marked change of the refractive index in the optical fibre.

A study of the phenomenon of resonant non-linearity shows that the selection of the dopant is of great importance. The article by M.J.F. Digonnet, R.W. Sadowski, H.J. Shaw and R.H. Pantell, "Experimental Evidence for Strong UV Transition Contribution in the Resonant Nonlinearity of Doped Fibers", J. Lightwave Technology, vol. 15, no. 2, February 1997, pp. 299-303, shows that a dopant suitable for the purpose must have high solubility in the glass matrix of the optical fibre (in particular, it must be possible to incorporate it in high concentrations to enable relatively short devices to be made), it must be suitable for being excited by relatively low levels of optical power, and, if the exciting power is to be minimized, it must have relatively long radiative lifetimes. The aforesaid article by Digonnet et al. also shows that the change of the refractive index in the optical fibre is caused not only by the factor of the electron transition of the dopant associated with the excitation wavelength (generally in the visible or near infrared region), but also by additional factors of electron transitions of the dopant in the ultraviolet. These transitions in the ultraviolet, unlike the transition at the excitation wavelength, cause a marked change in refractive index even at wavelengths remote from the corresponding spectral region. In particular, these transitions in the ultraviolet produce effects as far away as the near infrared region. For this reason, it is important that the selected dopant should have intense electron transitions in the ultraviolet, in other words transitions characterized by a high oscillator strength.

The requirements described above are met, in particular, by the rare earths. This is because rare earths have good solubility in glasses with a silica matrix and can be incorporated in the matrix of an optical fibre by technologies which have already been developed, and which allow ample freedom of choice in the specification of the characteristics of the fibre, the doping level and the incorporation of co-dopants in the glass matrix. Additionally, rare earths have electric dipole transitions in the ultraviolet associated with different energy levels ("shells") (for example, 4f-5d), and which therefore have an oscillator strength several orders of magnitude higher than that of the excitation transition. A suitable choice of the rare earth also makes it possible to use, for the excitation, a radiation at a wavelength remote from the second and third transmission windows, in which, therefore, the signal transmission can be kept substantially "transparent". This excitation can advantageously be produced by a laser diode at low cost.

In addition to rare earths, other dopants have been proposed (as described, for example, in the previously cited article by Digonnet et al., "Experimental Evidence for Strong UV Transition Contribution in the Resonant Nonlinearity of Doped Fibers"), including colour centres, transition metals and semiconductor materials. However, none of the cited materials provides overall performances comparable with those provided by the rare earths.

The non-linear phenomena described above have been used to produce various types of optical switching and filtering devices, which operate in a controlled way on the wavelengths of an optical signal.

In particular, devices of the interferometric type, which use the phenomenon of resonant non-linearity in an optical fibre and which use dopants of a different type, have been proposed. In particular, there have been proposed interferometric devices comprising optical fibres doped with erbium (as described, for example, in R.H. Pantell, M.J.F. Digonnet, R.W. Sadowski and H.J. Shaw, "Analysis of Nonlinear Optical Switching in an Erbium-Doped Fiber", J. Lightwave Technology, vol. 11, no. 9, September 1993, pp. 1416-1424), with neodymium (as described, for example, in R.W. Sadowski, M.J.F. Digonnet, R.H. Pantell and H.J. Shaw, "Microsecond optical-optical switching in a neodymium-doped two-mode fiber", Optics Letters, vol. 18, no. 11, pp. 927-929) and with ytterbium (as described, for example, in J.W. Arkwright, P. Elango, T.W. Whitbread and G.R. Atkins, "Nonlinear Phase Changes at 1310 nm and 1545 nm Observed Far from Resonance in Diode Pumped Ytterbium-Doped Fiber", IEEE Photonics Technology Letters, vol. 8, no. 3, March 1996, pp. 408-410). A typical example consists of an interferometer of the Mach-Zehnder type comprising an active fibre in one of its two branches. The transmissivity of this interferometer is controlled by changing the refractive index of the active fibre by suitable excitation. These devices, however, suffer from the typical disadvantages of the devices of the interferometric type; in particular, they have considerable problems of phase and polarization stabilization.

A device of a different type is proposed by M. Janos, J.W. Arkwright and Z. Brodzeli in the article "Low power nonlinear response of $Yb^{3+}$-doped optical fibre Bragg gratings", Electronics Letters, vol. 33, no. 25, 4 December 1997, pp. 2150-2151. This article studies the non-linear response of a Bragg grating inscribed in an ytterbium-doped optical fibre, following excitation at 980 nm and using a signal at a wavelength of approximately 1550 nm. The non-linear change of the refractive index of the fibre core causes a displacement of the peak loss of the grating, which is used to carry out an all-optical modulation of the signal.

A Bragg grating is an optical component comprising a plurality of areas with a low refractive index and areas with a high refractive index, alternating with each other in a predetermined direction. There is a known way of making a Bragg grating in an optical fibre by forming the areas with a high refractive index and the areas with a low refractive index in the core of the fibre itself. This produces an optical filter capable of extracting from an optical signal a wavelength (called the "Bragg wavelength") which is a function of the grating period, in other words of the spacing between the areas with a high refractive index and the areas with a low refractive index.

Bragg gratings can be divided into two distinct classes: short-period Bragg gratings (SPG) (described, for example, in Raman Kashyap, "Photosensitive Optical Fibers: Devices and Applications", Optical Fiber Technology, vol. 1, pp. 17-34), characterized by sub-micrometric periods, and long-period Bragg gratings (LPG) (described, for example, in A.M. Vengsarkar, P.J. Lemaire, J.B. Judkins, V. Bhatia, T. Erdogan and J.E. Sipe, "Long-Period Fiber Gratings as Band-Rejection Filters", J. Lightwave Technology, vol. 14, no. 1, pp. 58-64), which typically have periods of the order of hundreds of $\mu m$. In particular, for the purposes of the present invention, the term "long-period grating" will be applied to a grating having a grating period in the range from 50 $\mu m$ to 1500 $\mu m$.

As is known in the art, short-period Bragg gratings (SPG) differ from "long-period" Bragg gratings (LPG) not only in the value of the grating period but also in the mode of operation on the optical signals.

Short-period gratings are capable of providing constructive interference in reflection of the fundamental mode of the optical signal only, and therefore act as selective mirrors which reflect light only at the Bragg wavelength $\lambda_B$. In a short-period grating, the Bragg wavelength is related to the characteristic of the optical fibre and of the grating by the following equation:

$$\lambda_B = 2 \cdot \Lambda \cdot n_{eff} \tag{1}$$

where $\Lambda$ is the grating period, in other words the spacing between the areas with a high refractive index and the areas with a low refractive index, and $n_{eff}$ is the effective refractive index of the fibre for the fundamental mode $LP_{01}$ which is propagated in the core of the fibre.

Unlike short-period gratings, long-period gratings are capable of transferring, as a function of the grating period, the power of the fundamental mode $LP_{01}$ to higher-order co-propagating modes. The single-mode fibres typically used in telecommunications have a protective coating around the cladding, this coating having a refractive index much higher than that of the cladding. The presence of this coating prevents the propagation of higher-order modes in single-mode fibres. However, in order to be able to inscribe a long-period grating in the core of an optical fibre, the protective coating has to be removed from the portion of fibre which has to contain the grating. Consequently, the outer surface of the cladding of this portion of fibre forms a glass-air interface, whose presence permits the propagation of higher-order modes, call "cladding modes". When an optical signal passes through the portion of fibre containing the grating, the grating transfers part of the optical power contained in the signal from the fundamental mode to the cladding modes. These cladding modes are transmitted as far as the end of the portion without the protective coating, after which they are rapidly attenuated at the cladding/coating interface of the next portion of fibre.

Consequently, unlike short-period gratings, long-period gratings operate in transmission only (in other words, they have no reflected components) and carry out a filtering at the wavelengths of coupling between the modes. Additionally, while a short-period grating has only one loss peak in its transmission spectrum (at the Bragg wavelength defined by Equation 1), a long-period grating has a plurality of loss peaks, at the wavelengths at which the fundamental mode $LP_{01}$ is coupled to the various cladding modes. By contrast with the case in which the grating is inclined ("slanted") with respect to the axis of the optical fibre, when the grating is orthogonal to the optical fibre the mode $LP_{01}$ can be coupled only to the modes $LP_{0m}$, in other words to modes of even order, for reasons of symmetry of the electromagnetic field.

For long-period gratings, the Bragg wavelengths are given by the equation:

$$\lambda_{B,m} = \Lambda \cdot (n_{eff,LP01} - n_{eff,LP0m}) \tag{2}$$

where $\Lambda$ is the grating period, $n_{eff,LP01}$ and $n_{eff,LP0m}$ are the effective refractive indices for the fundamental mode $LP_{01}$ and for the m-th cladding mode with even symmetry respectively.

For identical lengths and scribing conditions of the gratings, the width of the loss peaks of a long-period grating is much larger than that of the single peak of the short-period grating. This difference is due to the fact that, by comparison with short-period gratings, long-period gratings have a larger grating period, and consequently, for identical lengths, a smaller number of discontinuities (and consequently of electromagnetic components which interfere with each other). Therefore, in order to produce a long-period grating with a high spectral selectivity (in other words with a relatively small peak width) it is necessary to use a relatively long grating.

Although the type of grating used is not expressly stated in the article by Janos et al. cited previously, the Applicant observes that, in the field of optical communications, when reference is made to a Bragg grating without further details, what is meant is generally a short-period Bragg grating, in other words a grating characterized by a sub-micrometric period. The following should be noted as further evidence of the use of a short-period grating in the article by Janos et al. In the article by Janos et al., it is specified that the grating used for the experiments was printed by the phase masking method with ultraviolet radiation at 240 nm. As is known, in order to operate with this method, the ultraviolet radiation must have a wavelength of the same order of magnitude as the period of the grating which is to be printed. Whereas this condition can be satisfied for short-period gratings by a suitable choice of ultraviolet radiation, for long-period gratings the period is at least two orders of magnitude greater than the ultraviolet wavelengths which can be used, and therefore this relation cannot be satisfied. Moreover, in the experiment described in the article in question, a depth of intensity modulation of the transmitted signal of 63% and a maximum variation of 0.017 nm in the Bragg wavelength were obtained; since the depth of modulation is correlated with the ratio between the displacement of the grating spectrum and the width of the peak at the Bragg wavelength, a value of the peak width typical of a short-period grating was deduced from the values stated above.

The Applicant has observed that the device proposed by Janos et al. has limitations both in terms of the maximum obtainable displacement of the loss peak of the transmission spectrum and in terms of speed. In particular, in the article by Janos et al., when a Bragg grating inscribed in an optical fibre doped with 0.2% $Yb_2O_3$ by weight was used, a change of $1.6 \times 10^{-5}$ in the refractive index and a change of 0.017 nm in the Bragg wavelength were obtained. However, since the ratio between the electronic and the thermal effects is approximately 1:5 in the device of Janos et al., the electronic effects are associated with a change of approximately $0.3 \times 10^{-5}$ in the refractive index and with a maximum displacement of the spectrum of less than 0.003 nm (3 pm). This displacement of the spectrum corresponds to a depth of modulation of approximately 10%, which represents a relatively low value, even allowing for possible improvements obtainable by increasing the concentration of Yb, as proposed in the article in question.

The marked influence of thermal effects in the device of Janos et al. additionally comprises the presence of slow temperature drifts which considerably reduce the speed of the device. To mitigate this disadvantage, Janos et al. propose to increase the frequency of modulation of the excitation signal supplied to the optical fibre. However, the use of high frequencies to modulate the excitation signal is primarily of experimental value, since, in practical conditions, it is preferable to use excitation signals of the stepped or similar type, so that the state of the device can be varied as rapidly as possible. A signal of the stepped or similar type has contributions at all frequencies, including, in particular, the low frequencies at which the thermal contribution is significant.

The object of the present invention is to provide a tunable optical filtering device which makes use of the advantages offered by the resonant non-linear effect in optical fibres, but which overcomes, at least partially, the problems described above with reference to the known devices. In particular, the object of the present invention is to provide a tunable optical filter which has the same advantages as a device comprising a doped optical fibre having an inscribed short-period Bragg grating, but which, by comparison with this device, offers a better performance at least in terms of the maximum displacement of the loss peak of the transmission spectrum and in terms of speed.

The Applicant has found that this object can be achieved by means of a filter of the type comprising a Bragg grating inscribed in a doped optical fibre and operating by means of the resonant non-linear effect, in which the Bragg grating is a long-period grating, in other words a grating having a grating period in the range from 50 μm to 1500 μm. The optical fibre is preferably doped with Yb, and the exciting radiation to induce the non-linear effect is supplied by an excitation source, preferably a laser diode, coupled to the optical fibre by means of a WDM coupler. The tunability of the filter in respect of wavelength is obtained by means of a device for controlling the excitation source, capable of varying in a controlled way the power of the exciting radiation supplied to the optical fibre.

The Applicant has found a higher sensitivity to changes in the refractive index in long-period gratings than in short-period ones. Owing to this higher sensitivity, the Applicant has found that it is possible to use a long-period grating to form a filter which is tunable with displacements of the position of the loss peak equal at least to the width (at full height) of the peak. By comparison with the aforesaid device comprising a short-period grating, the filter proposed here can therefore operate in a wider range of wavelengths and with greater efficiency of modulation of the optical signal. In particular, the filter according to the invention makes it possible to obtain a depth of modulation of the optical signal close to the theoretical maximum (100%), attributable virtually exclusively to electronic effects.

The Applicant has also observed that, since the thermal effects are essentially negligible by comparison with the electronic effects, the filter according to the invention has, unlike the device comprising short-period Bragg gratings, time responses which are virtually unaffected by temperature drift. For this reason, the filter according to the invention is faster than the device which uses a short-period grating.

Owing to the characteristics described above, the filter according to the present invention can be used advantageously in a WDM transmission system, for example to flatten the gain spectrum of an optical amplifier. This function is normally carried out by fixed-band optical filters. However, if the operating conditions of the amplifier are subject to variation, the use of fixed-band filters may cause a reduction in the efficiency of the amplifier which, for its compensation, requires a change either in the level of the signal or in the wavelength on which the filter is centred. Although the level of the signal can be varied by providing a variable attenuator in series with the filter, the wavelength on which the filter is centred cannot generally be varied. The filter according to the invention can be used advantageously as a tunable filter in this application, to equalize the gain curve of the amplifier in a controlled way. This function could not be carried out by a device such as that proposed by Janos et al., since both the width of the peak in the grating spectrum and the range of wavelengths of tunability of the device would be too small with respect to the amplification band of the amplifier to allow the gain curve to be equalized.

In a first aspect, the present invention relates to an optical transmission system, comprising an optical transmitter, an optical receiver, an optical transmission line connecting the said transmitter to the said receiver and a tunable optical filter connected in the said transmission line, the said filter comprising an optical fibre incorporating a dopant, a diffraction grating inscribed in the said optical fibre, an excitation source capable of generating an exciting radiation, at an excitation wavelength of the said dopant, an optical coupler optically connecting the said excitation source to the said optical fibre, and a device for controlling the said excitation source, capable of controlling the power of the said exciting radiation characterized in that the said grating is a long-period grating.

In a second aspect, the present invention relates to an optical amplifier comprising at least one active fibre capable of receiving and amplifying optical signals, at least one pump source capable of generating a pumping radiation for the said active fibre, at least one WDM coupler for optically coupling the said pump source to the said active fibre and a tunable optical filter associated with the said active fibre, the said filter comprising an optical fibre incorporating a dopant capable of being excited by an exciting radation having a predetermined wavelength, and a long-period diffraction grating inscribed in the said optical fibre.

The amplifier may also comprise an excitation source capable of generating the said exciting radiation, an optical coupler optically connecting the said excitation source to the said optical fibre, and a device for controlling the said excitation source, capable of controlling the power of the said exciting radiation.

Preferably, the said long-period grating has a grating period in the range from 100 μm to 800 μm, or more preferably from 150 μm to 600 μm.

The said filter has a loss peak which, when the said optical fibre is excited by the said exciting radiation with an optical power greater than a predetermined power, preferably undergoes a wavelength displacement of at least 3 nm.

Preferably, the said dopant is a rare earth, more preferably Yb.

According to a further aspect, the present invention relates to a tunable optical filter comprising an optical fibre incorporating a dopant capable of being excited by an exciting radiation having a predetermined wavelength and a diffraction grating inscribed in the said optical fibre, the said grating being a long-period grating.

The filter may further comprise an excitation source capable of generating the said exciting radiation, an optical coupler optically connecting the said excitation source to the said optical fibre, and a device for controlling the said excitation source, capable of controlling the power of the said exciting radiation.

Preferably, the said long-period grating has a grating period in the range from 100 µm to 800 µm, or more preferably from 150 µm to 600 µm.

The said filter has a loss peak which, when the said optical fibre is excited by the said exciting radiation with an optical power greater than a predetermined power, preferably undergoes a wavelength displacement of at least 3 nm.

Preferably, the said dopant is a rare earth, more preferably Yb.

The said optical fibre is also preferably doped with Al and P.

According to a final aspect, the present invention relates to a method for wavelength filtering an optical signal, comprising the phases of:

- supplying the said signal to a portion of optical fibre incorporating a dopant capable of being excited by an exciting radiation with a predetermined wavelength, the said portion of fibre having a refractive index correlated with the state of excitation of the said dopant; and
- filtering, in the said portion of fibre, one wavelength of the said signal;

the said filtering phase comprising the phase of causing, in the said portion of fibre, the generation of higher-order modes of the said optical signal at the said wavelength, starting from the said fundamental mode.

The method according to the invention may also comprise the phase of exciting the said dopant to induce a change of the said refractive index and consequently a change in the said filtered wavelength.

Preferably, the said change in the said filtered wavelength, when the said fibre is excited by an optical power greater than a predetermined power, is at least 3 nm.

Additionally, the said phase of filtering a wavelength of the said signal preferably comprises the phase of diffracting the said signal with a spatial periodicity in the range from 100 µm to 800 µm, or more preferably from 150 µm to 600 µm.

The said dopant is preferably Yb.

Further details may be obtained from the following description which makes reference to the attached figures listed below:

- Figure 1 is a schematic representation of a filter according to the invention;
- Figure 2 shows schematically an optical transmission system in which the filter shown in Figure 1 may advantageously be used;
- Figure 3 shows a preferred application for the filter shown in Figure 1;
- Figure 4 shows the absorption spectrum of an active optical fibre suitable for use in the filter shown in Fig. 1;
- Figure 5 shows how the spectral response of the filter in Figure 1 varies with the variation of the power of the exciting radiation, when white light is supplied to the input of the filter;
- Figure 7 shows schematically an experimental configuration used to make measurements on the filter shown in Figure 1; and
- Figures 8 and 9 show the results of measurements made with the configuration shown in Figure 5.

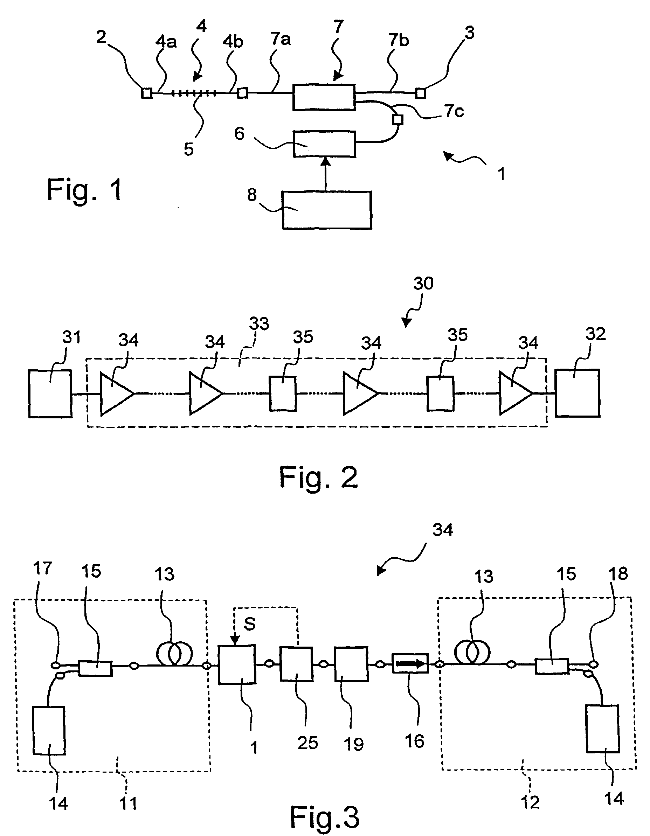

With reference to Figure 1, the number 1 indicates, as a whole, a tunable optical filter suitable, as will be described below, for use in optical applications in which an optical signal has to be wavelength filtered or spectrally shaped.

The filter 1 has an optical input 2 and an optical output 3, for the input and output of optical signals respectively, and comprises an active optical fibre 4, a Bragg grating 5 inscribed in the active fibre 4 (and indicated schematically by a plurality of parallel segments), an excitation source 6 capable of emitting an exciting radiation for the active fibre 4 and an optical coupler 7 of the WDM type capable of optically coupling the source 6 to the active fibre 4.

The active fibre 4 and the coupler 7 are connected in series between the input 2 and the output 3. In detail, the active fibre 4 has a first end 4a connected to the input 2 and a second end 4b connected to the coupler 7. The coupler 7 comprises a first access fibre 7a connected to the end 4b of the active fibre 4, a second access fibre 7b connected to the source 6 and a third access fibre 7c connected to the output 3. Preferably, the fibre 4 and the access fibres 7a, 7b and 7c are all single-mode fibres. In the example shown in Fig. 1, the coupler 7 is connected to the active fibre 4 in such a way as to form an excitation configuration of the counter-propagating type. Alternatively, other types of excitation configuration may be used, for example a configuration of the co-propagating type or a configuration with both co-propagating and counter-propagating excitation (not illustrated).

The source 6 is preferably a laser source, or more preferably a wavelength-stabilized laser diode.

The filter 1 also comprises an electronic control unit 8 of a known type, connected to the excitation source 6 to control the power of the exciting radiation emitted.

The core of the active fibre 4 is doped with a suitable dopant, preferably ytterbium, which is capable, when excited by the exciting radiation, of causing a change in the refractive index of the core of the active fibre 4 as a result of the phenomenon of resonant non-linearity described previously. The wavelength of the exciting radiation is chosen to match the wavelength of a principal transition of the aforesaid dopant.

The active fibre 4 may be formed from a preform of phosphorus-aluminium-silica matrix, made by the "modified chemical vapour deposition" (MCVD) and "solution doping" processes and having a high concentration of both aluminium (Al) and phosphorus (P) in its core. The presence of both of these elements makes it possible to increase the solubility of the ytterbium in the glass matrix. The phosphorus is also used to keep the value of the numerical aperture of the fibre relatively low, since both ytterbium and aluminium contribute to an increase in the refractive index. If the value of the numerical aperture were high (above 0.2 for example), then in order to maintain the single-mode propagation condition it would be necessary to accept a reduced mode field diameter and consequently a low coupling efficiency of the junction with fibres of the standard type or of the "dispersion shifted" type. Furthermore, if the fibre 4 has to be subjected to a process of photo-printing with ultraviolet rays to form the grating 5 (as described below), the core must also be doped with germanium (Ge) to make the fibre photo-refractive. However, since germanium also contributes to an increase in the numerical aperture of the fibre, its concentration must be kept relatively low, preferably at less than 1%.

For the application in question, doping with ytterbium was preferred to doping with other rare earths, mainly for the following reasons:

- by comparison with other rare earths, ytterbium has a very simple energy levels diagram and shows a very intense absorption peak in the vicinity of 980 nm, while it is virtually "transparent" in both the second and the third transmission window of the optical fibres;
- ytterbium can easily be incorporated in silica-matrix glasses, and by using a matrix including aluminium and phosphorus it is possible to reach relatively high doping concentrations (more than $10^{20}$ ions/cm$^3$). These levels of concentration make it possible to have peak absorptions of exciting radiation of more than 2000 dB/m, without problems of crystallization and with a relatively low background attenuation. By using different matrices, such as oxide glasses based on phosphorus, boron, calcium or sodium, or zirconium fluoride glasses, the concentration of ytterbium can be increased by a further order of magnitude, thus yielding changes of refractive index ten times greater for the same length of fibre. In any case, the concentration of ytterbium is preferably as high as is possible without causing problems of crystallization of the glass matrix;
- the wavelength of the absorption peak of ytterbium makes it possible to use excitation by laser diodes, in other words by low-cost excitation sources;
- the lifetime of the principal transition of ytterbium in a silica matrix is typically 760 μs which, while not being one of the shortest among the rare earths, can allow response times of approximately 3 ms in an application such as that considered here.

According to the present invention, the grating 5 is a long-period grating orientated orthogonally to the axis of the active fibre 4.

The grating 5 has a grating period preferably in the range from 100 μm to 800 μm, and more preferably from 150 μm to 600 μm. The insertion losses of the grating 5 are less than 4 dB.

Various methods are known for forming a long-period grating in an optical fibre.

A first method (described, for example, in Raman Kashyap, "Photosensitive Optical Fibers: Devices and Applications", Optical Fiber Technology, vol. 1, pp. 17-34) consists in exposing the core of the fibre to an ultraviolet radiation of suitable wavelength. However, the Applicant has observed that the characteristics of the fibre 4 are not particularly suitable for the use of this method, in particular because of the low content of germanium (and, therefore, the low photosensitivity of the fibre). This is because the low content of germanium makes it impossible to obtain a marked loss peak in the transmission spectrum of the grating.

An alternative method consists in modulating the refractive index by locally heating the core of the optical fibre by means of a laser beam generated by a $CO_2$ laser (as described, for example, in D.D. Davis, T.K. Gaylord, E.N. Glytsis, S.G. Kosinski, S.C. Mettler and A.M. Vengsarkar, "Long-period fibre grating fabrication with focused $CO_2$ laser pulses", Electronics Letters, vol. 34, no. 3, pp. 302-303) or by means of an electric arc generated by an ordinary splicer for optical fibres (as described, for example in patent EP 840146). The Applicant has observed, however, that, owing to the particular composition of the core of the active fibre 4, this method is not particularly suitable for the formation of a grating with the desired characteristics, since it is not possible to obtain a loss peak with a height of more than 6 dB at the Bragg wavelength.

The Applicant considers that, in order to form a long-period grating in a fibre such as the fibre 4 described above, it is preferable to use another method, in which the periodic changes of the refractive index are obtained by periodically deforming the fibre itself, and in particular by creating periodic local reductions in the diameter of the core and of the cladding. These deformations may be obtained by means of an optical fibre splicer, by applying an electric arc locally after having applied a tension to the fibre, and repeating this operation in a plurality of longitudinal positions at predetermined intervals with respect to each other. Each electrical discharge causes a softening of the glass, and, as a result of the applied tension, a substantially uniform local elongation and thinning of the fibre. After each electrical discharge, the optical fibre is moved through a distance equal to the specified grating period, for example by means of a micrometric translator.

When an optical fibre having a grating formed in this way is used to transmit optical signals, the local deformations of the grating may cause non-negligible losses in the signals (similar to the bending losses), particularly in the third transmission window of the optical fibres. To reduce these losses, which might become critical in the case of optical fibres with low values of the "cut-off" wavelength (in particular for values of less than 800 nm) or with low values of the numerical aperture (in particular for values of less than 0.15), it is necessary to use electrical discharges having low power and duration, such that the deformations are kept relatively small (for example, approximately 10 μm for an external fibre diameter of 125 μm) and the losses are kept within acceptable limits.

The filter 1 operates in the following way. When an optical signal of the WDM type is supplied to the filter 1 through the input 2, this signal passes through the fibre 4 to arrive at the grating 5. The latter, being a long-period grating, causes an energy transfer between the optical modes of the signal, and, in particular, produces a filtering (loss peak) at the Bragg wavelength which satisfies equation (2), reproduced below:

$$\lambda_{B,m} = \Lambda \cdot (n_{eff,LP01} - n_{eff,LP0m}) \tag{2}$$

When the exciting radiation is supplied to the active fibre 4, the refractive index of the core of the active fibre 4 increases as a result of the resonant non-linear effect. As the refractive index of the core of the active fibre 4 changes, both $n_{eff,LP01}$ and $n_{eff,LP0m}$ also change. Since the fundamental mode is more closely confined in the core of the active fibre 4 than the higher-order modes, the values of $n_{eff,LP01}$ and $n_{eff,LP0m}$ change, in response to a change in the refractive index of the core, by different amounts. Consequently, the Bragg condition is satisfied for a new value of wavelength (in other words for a new Bragg wavelength) and the loss peak is shifted in accordance with this new value. The transmission spectrum of the grating 5 is therefore modified.

By using the control unit 8 to control the power of the exciting radiation supplied to the active fibre 4, it is possible to control the change in the refractive index in the active fibre 4 and, consequently, the displacement of the loss peak of the transmission spectrum of the grating 5. In this way it is possible to tune the filter 1 with respect to wavelength.

By differentiating equation (2) with respect to the non-linear change $dn_{core}$ of the refractive index of the core of the fibre, we obtain the following equation (3), which establishes a relation between the change in the refractive index in the core of the fibre and the displacement of the loss peak of the grating:

$$\frac{d\lambda_B}{dn_{core}} = \Lambda \cdot \frac{d(n_{eff,LP01} - n_{eff,LP0m})}{dn_{core}} \tag{3}$$

To compare the behaviour of a long-period grating with that of a short-period grating, it is useful to derive a similar relation for a short-period grating. By differentiating the Bragg equation (1) for a short-period grating, we obtain the following equation:

$$\frac{d\lambda_B}{dn_{core}} = 2\Lambda \cdot \frac{dn_{eff}}{dn_{core}} \tag{4}$$

In the case of a same optical fibre, the differential terms of the products in the second members of equations (3) and (4) are of the same order of magnitude, and therefore, as a first approximation,

$$\frac{\left(\dfrac{d\lambda_B}{dn_{core}}\right)_{long\_period}}{\left(\dfrac{d\lambda_B}{dn_{core}}\right)_{short\_period}} \approx \frac{(\Lambda)_{long\_period}}{(2\Lambda)_{short\_period}} \qquad (5)$$

As mentioned previously, the value of the grating period $\Lambda$ is considerably different in the two cases. In particular, in the case of a spectral region around 1500 nm, a short-period grating generally has a period of approximately 0.5 micrometres, while a long-period grating typically has a period of a few hundred micrometres, in other words more than two orders of magnitude greater than that of a short-period grating. According to equation (5), there is a difference of the same size between the maximum displacements of the peak wavelength of the grating that can be obtained in the two cases.

In the grating 5, the cladding mode $LP_{0m}$ to which the fundamental mode $LP_{01}$ is to be coupled is a parameter which must be selected at the time of the specification of the characteristics of the grating 5. The selection of the cladding mode $LP_{0m}$ primarily affects the selection of the grating period $\Lambda$, since the two parameters are correlated with each other according to the Bragg equation (2). Furthermore, the selection of the cladding mode $LP_{0m}$ has an effect on the maximum displacement of the loss peak, and on the width and depth of the peak. In particular, when the order of the selected cladding mode increases, there is a higher sensitivity of the Bragg wavelength to the change in refractive index induced by resonant non-linearity and a greater width of the loss peak. Additionally, as shown in the article by A.M. Vengsarkar, P.J. Lemaire, J.B. Judkins, V. Bhatia, T. Erdogan and J.E. Sipe, "Long-Period Fiber Gratings as Band-Rejection Filters", J. Lightwave Technology, vol. 14, no. 1, pp. 58-64, in order to obtain a deep loss peak it is preferable to couple the fundamental mode to a high-order cladding mode, since high-order modes are coupled more strongly than low-order modes to the fundamental mode.

The selection of the cladding mode therefore depends on which of the parameters listed above is most important for a specific application. Let us consider, for example, a case in which the filter 1 is to be used to modulate the intensity of a signal having a fixed wavelength, coinciding, when no excitation has been applied, with the wavelength of the loss peak of filter 1 itself. To obtain maximum modulation of the signal intensity, the displacement of the loss peak obtainable by the resonant non-linear effect must be at least equal to the half-width of the peak. Therefore, as the ratio between the maximum displacement of the loss peak and the width of the peak increases, the excitation power required to obtain complete modulation of the intensity of the signal decreases. The selection of a high-order cladding mode makes it possible to have a high value of the maximum displacement of the loss peak, but also produces a high value of the width of the peak. Although it is possible to reduce the width of the peak by forming a relatively long grating (measuring about ten centimetres, for example), an increase in the length of the grating is accompanied by an increase in the excitation power required to obtain complete inversion along the whole of the grating region, and, therefore, to obtain the maximum possible displacement of the loss peak. The selection of the cladding mode to which the fundamental mode is to be coupled therefore implies a trade-off between the excitation power, the length of the grating and the extinction of the signal. To find the best trade-off between the cited parameters, it may be convenient to make use of a digital simulation as described below.

The filter 1 may be used in an optical transmission system of the WDM type such as that shown schematically in Figure 2, to modify the spectral characteristics of the transmitted signals. With reference to Figure 2, an optical transmission system 30 of the WDM type generally comprises a multiple-wavelength optical transmitter 31, an optical receiver 32 and an optical fibre transmission line 33 connecting the receiver 32 to the transmitter 31. If the transmission distance is large, the transmission line 33 may comprise one or more wide-band optical amplifiers 34 to amplify the signal. The transmission system 30 may also comprise intermediate stations 35, interposed along the transmission line 33, at which signals at predetermined wavelengths are then injected and/or extracted.

In a WDM system such as that described, the filter 1 may, for example, be associated with an amplifier 34, and have the principal function of flattening the gain spectrum of the amplifier.

Figure 3 shows, by way of example, the possible structure of one of the amplifiers 34. The amplifier in Figure 3 is an amplifier having an input 17 and an output 18 for the optical signals and comprising a first and a second amplification stage 11, 12. Each amplification stage 11, 12 comprises an active fibre 13 (doped with erbium, for example) of a known type, a pump laser 14 of a known type capable of generating exciting radiation for the fibre 13, and a WDM coupler 15 (of the fused fibre type, for example) of a known type capable of optically coupling the pump laser 14 to the active fibre 13. An optical isolator 16 is preferably present between the two amplification stages 11 and 12.

Generally, a fixed-band (in other words, non-tunable) optical filter connected between the two amplification stages 11, 12 is used to flatten the gain spectrum of an amplifier such as that shown. The transmissivity curve of such a filter is typically a function of the operating conditions of the amplifier (including the pump power and the number, power and distribution of the channels). Since these operating conditions may be subject to change, even the transmissivity curve of the optimal filter must be adapted by changing either the attenuation level and the wavelength on which the filter is centred. The attenuation level can be changed by introducing a variable attenuator in series with the fixed-band filter, but the wavelength on which the filter is centred cannot generally be varied. This disadvantage can be overcome by the use of the filter 1 in place of a fixed-band filter. This is because, when the filter 1 is connected between the first and second stages 11, 12 of the amplifier in Figure 3, the filtering wavelength can be tuned, and therefore the performance of the amplifier can be optimized in relation to its operating conditions. As shown in Figure 3, the amplifier 34 may if necessary comprise a variable attenuator 19, connected in series with the filter 1 for example, to vary the attenuation level of the signal.

The unit 8 of the filter 1 may also be connected to an optical channel analyser device 25, connected, for example, in series with the filter 1, and capable of monitoring characteristic parameters of the optical signal, such as the number of channels (at respective wavelengths) present in the signal, or the power of the signal. The unit 8 is capable of receiving from the device 25 a signal S indicating the aforesaid characteristic parameters, of processing the data contained in the signal S, and of controlling the power of the exciting radiation in accordance with these data. The device 25 may also be placed in a different point of the amplifier 34 or at a point in the transmission system 30 remote from the filter 1, for example at the transmitter 31 or at the receiver 32. The device 25 may, for example, be made as described in European patent application No. 98110820.2 filed on 12 June 1998 by the present Applicant.

Clearly, the filter 1 can be used in optical amplifiers different from that which has just been described, for example in amplifiers with a single stage, with pumping configurations different from that shown in Figure 3, with a different number and arrangement of optical isolators, and with different types of active fibre.

As an alternative to its use in the optical amplifiers, the filter 1 may be used at any other point in the transmission system 30 in which it is necessary to operate in a selective way with the wavelengths.

A practical example of an embodiment of the filter 1 is described below.

In this example of an embodiment, the active fibre 4 is of the step index type and has a numerical aperture of 0.162 and a "cut-off" wavelength of 890 nm. This "cut-off" wavelength corresponds to a confinement factor $\Gamma$ of the optical power in the core of the fibre, at the excitation wavelength, equal to 0.722. On the basis of the above data, the estimated diameter of the core of the active fibre 4 is found to be approximately 4.3 $\mu$m. When analysed by electron scanning microscope, the active fibre 4 is found to have the composition shown in the following table, in which the values of concentration are expressed in atomic percentages and relate to the centre of the core of the active fibre 4.

|               | Si    | Ge   | Al   | P    | Yb   |
| ------------- | ----- | ---- | ---- | ---- | ---- |
| Concentration | 83.88 | 0.35 | 7.34 | 7.27 | 1.17 |

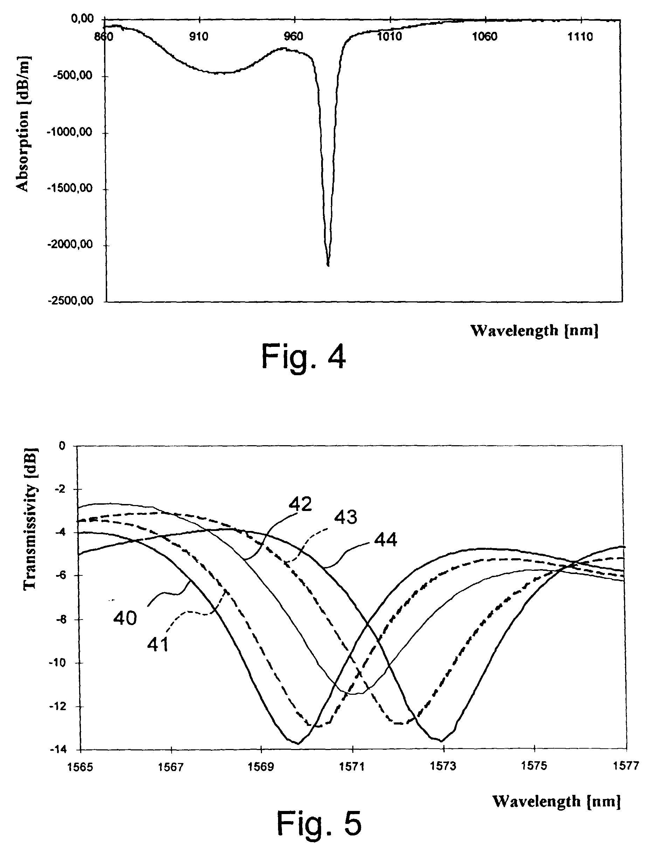

The optical absorption was measured in a short section of this active fibre 4, with a length of 7.5 mm. The particularly small length of this section of fibre was chosen because of the particularly high value of attenuation at the loss peak. The absorption spectrum of this section of fibre, shown in Figure 4, was found by feeding the wide-spectrum radiation of an incandescent lamp to the active fibre 4 and analysing the radiation leaving the active fibre 4 with an optical spectrum analyser. The curve in Figure 4 shows the presence of an absorption peak centred on approximately 976.5 nm and having a height of approximately 2180 dB/m.

To characterize the active fibre 4 in terms of resonant linearity, a Mach-Zehnder interferometer (not illustrated) was made, and a section of active fibre 4 with a length of 44 mm (such that an overall absorption of approximately 96 dB was introduced) was connected in one of its branches. The exciting radiation of a stabilized laser diode emitting at 977 nm, coupled to the active fibre 4 by a WDM coupler, was used to excite this section of fibre. At this wavelength, the effective absorption of the active fibre 4 is approximately 2100 dB/m. A narrow-band signal centred on the wavelength of 1550 nm was sent into the interferometer. The total population inversion of the ytterbium contained in the core of the active fibre 4 was produced by exciting the fibre with a radiation having a power of 18 mW and modulated at a frequency of approximately 10 Hz. In the presence of total population inversion, the signal showed a maximum phase shift of 1.9 rad (in other words, 0.6 $\pi$ rad).

The behaviour of a long-period grating formed in the active fibre 4 when an exciting radiation sufficient to cause a uniform population inversion throughout its length was supplied to the fibre was studied by a digital simulation using the values measured previously. In particular, for each cladding mode, the period $\Lambda$ of the grating which permits coupling between the mode in question and the fundamental mode at 1550 nm was measured, together with the corresponding change in the wavelength $\Delta\lambda_p$ of the loss peak of the grating. The results of the simulation are shown in the following table.

|  | LP02 | LP03 | LP04 | LP05 | LP06 | LP07 | LP08 | LP09 |
|---|---|---|---|---|---|---|---|---|
| $\Lambda$ [µm] | 1040 | 927 | 784 | 646 | 528 | 433 | 357 | 297 |
| $\Delta\lambda_p$[nm] | 2.56 | 2.64 | 2.80 | 3.03 | 3.42 | 3.99 | 5.02 | 7.11 |

On the basis of the results of the simulations and the preceding considerations concerning the selection of the mode to be coupled to the fundamental mode, the Applicant decided to print the grating 5 in the core of the active fibre 4 with a nominal period of 520 µm, in such a way that it was possible to use the coupling between the fundamental mode and the mode $LP_{06}$ in the third transmission window of the optical fibres. The grating 5 was formed in the core of the active fibre 4 by means of a fusion splicer, using the method of periodic deformation of the fibre. In particular, an FSM20-C32 fusion splicer made by the Fujikura company was used. The grating 5, having a length of 80 mm, was made, in particular, by applying 162 arc discharges with a current of 10 mA and a duration of 250 ns each to the core of the active fibre 4. Each discharge was generated after a tension of 34 g had been applied to the active fibre 4 and was followed by a displacement of the fibre equal to the aforesaid nominal period.

When the spectrum of the grating 5 was measured, a principal loss peak centred on approximately 1569.5 nm was found, with a height of approximately 10 dB and a width, measured at half height, of approximately 2 nm. These characteristics indicate that, with a displacement of the loss peak in excess of 2 nm produced by the resonant non-linear effect, it is possible to produce changes in transmissivity of at least 10 dB.

In the example of embodiment considered here, the filter 1 comprises, in addition to the active fibre 4 and the grating 5 described previously, an excitation source 6 consisting of a stabilized laser diode operating at 977 nm (in particular, a laser diode produced by the present Applicant) and a coupler 7 consisting of a WDM 980/1550 nm coupler (in particular, the SWDM-C coupler produced by the E-TEK company). The access fibres 7a, 7b and 7c of the coupler 7 are of the step index type with a numerical aperture of 0.2 and a "cut-off" wavelength of 940 nm.

For a first measurement, the input 2 of the filter 1 was connected to a source of white light and the output 3 was connected to a spectrum analyser. After sending a white light signal to the filter 1, the spectral response of the filter 1 to a change in the power of the exciting radiation was recorded. This spectral response is illustrated in Figure 5, which shows five curves, 40, 41, 42, 43 and 44, corresponding to pumping peaks of 0 mW, 5.7 mW, 13.1 mW, 28.4 mW and 52.3 mW respectively.

From the shape of the curves in Figure 5 it may be seen that the change in excitation power causes not only a shift of the loss peak but also a deformation of the peak itself. As the excitation power increases, then in addition to the displacement of the peak towards higher wavelengths, there is initially a widening and a height reduction of the peak, and then a contraction and a height increase of the peak, until a shifted copy of the initial spectrum is obtained. This behaviour is due to the fact that, for low excitation powers, not all of the active fibre 4 is inverted, and therefore only part of the grating 5 is subject to the change in refractive index. The maximum displacement of the loss peak, which occurs when the active fibre is completely saturated, is approximately 3 nm, which is substantially in agreement with what was predicted by the simulations.

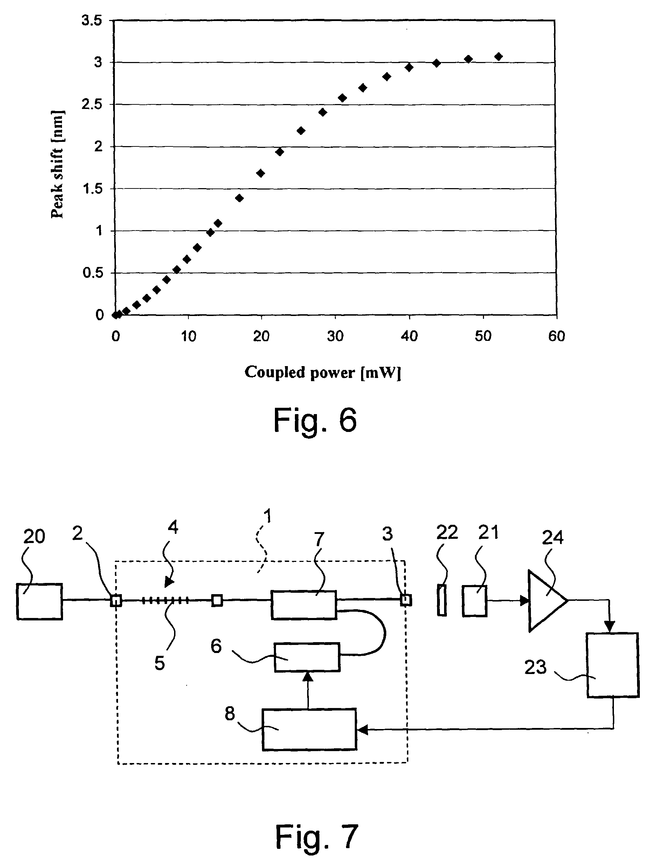

The same experimental apparatus was used to measure the displacement of the loss peak as a function of the coupled excitation power in the active fibre 4. As shown in Figure 6, the filter 1 has a tuning range with a practically linear variation of amplitude of more than 2.5 nm.

In a second measurement, the experimental configuration shown in Figure 7 was used. This configuration includes, in addition to the filter 1, a tunable laser source 20 connected to the input 2 and capable of feeding signals at predetermined wavelengths to the filter 1, and a photodiode 21 capable of receiving the signals leaving the filter 1 through the output 3, after they have been filtered by an interference filter 22. The interference filter 22 has the function of eliminating the contribution of counter-propagating amplified spontaneous emission (ASE). The experimental configuration also includes an oscilloscope 23 connected to the photodiode 21 via an electronic preamplifier 24. The control unit 8 comprises an electronic processor connected to the oscilloscope 23 and a square-wave generator controlled by the electronic processor and capable of feeding a square-wave control signal to the excitation source 6. The rise time and decay time of the square-wave control signal are negligible with respect to the response times of the filter 1.

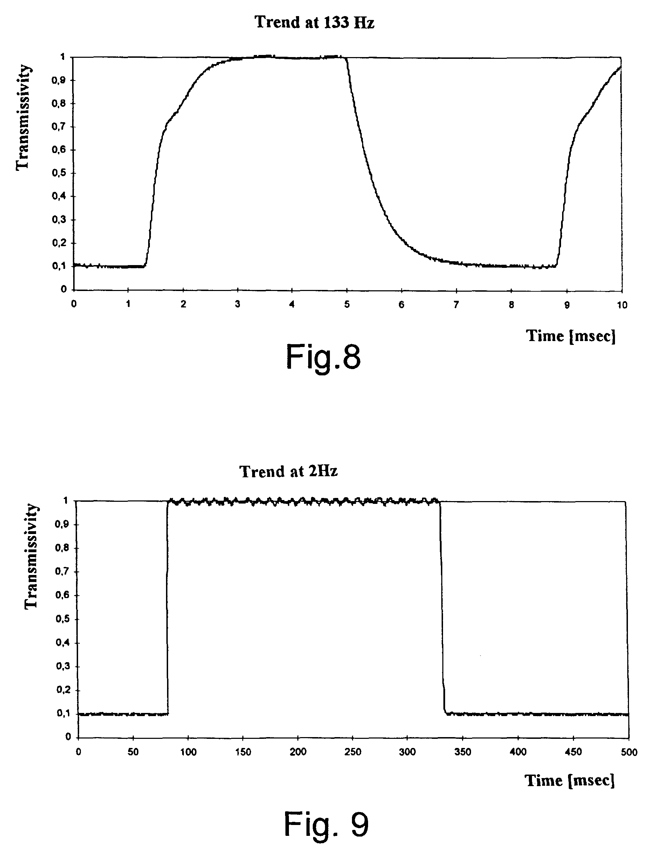

When a narrow-band signal at 1569.5 nm, in other words at the wavelength of maximum attenuation of the grating 5, is fed to the filter 1 by means of the laser source 20, and the active fibre 4 is excited by an exciting signal modulated at a frequency of 133 Hz, the output signal shown in Figure 8 is obtained. The rise and decay transitions of the output signal are characterized by corresponding rise and decay times, measured between the 10% and the 90% points of the transition, of 0.95 ms and 1.04 ms respectively.

Figure 9 shows the time response of the signal obtained by modulating the exciting signal at 2 Hz, in other words with very long periods with respect to the lifetime of the metastable level of the Yb ion. The absence of a slow drift in the response of the filter 1 confirms that the parasitic thermal effects due to non-radiative decays of the absorbed power are negligible with respect to the non-linear modulation effect, by contrast with what occurs in a device comprising a short-period grating. The fact that thermal effects play a lesser part in the filter 1 than in a device comprising a short-period grating can also be predicted theoretically, since the sensitivity of the Bragg wavelength to the temperature of long-period gratings is greater by approximately one order of magnitude than that of short-period gratings, while the maximum displacement of the loss peak due solely to electronic effects in the filter 1 is greater by approximately three orders of magnitude than that obtainable with a device comprising a short-period grating. This advantage is translated, in accordance with the description above, into a similar advantage in terms of the speed of the filter.

The measurements which were made confirm, therefore, that the filter 1 can be used advantageously as a tunable filter in optical transmission systems, and that it is capable of operating with response times of a few ms and with pump powers of the order of tens of mW.

**Claims**

1.  Optical transmission system (30), comprising an optical transmitter (31), an optical receiver (32), an optical transmission line (33) connecting the said transmitter (31) to the said receiver (32) and a tunable optical filter (1) connected in the said transmission line (33), the said filter (1) comprising an optical fibre (4) incorporating a dopant, a diffraction grating (5) inscribed in the said optical fibre (4), an excitation source (6) capable of generating an exciting radiation at an excitation wavelength of the said dopant, an optical coupler (7) optically connecting the said excitation source (6) to the said optical fibre (4), and a device (8) for controlling the said excitation source (6), capable of controlling the power of the said exciting radiation, characterized in that the said grating (5) is a long-period grating.

2.  Optical amplifier (34) comprising at least one active fibre (13) capable of receiving and amplifying optical signals, at least one pump source (14) capable of generating a pumping radiation for the said active fibre, at least one WDM coupler (15) for optically coupling the said pump source (14) to the said active fibre (13) and a tunable optical filter (1) associated with the said active fibre (13), the said filter (1) comprising an optical fibre (4) incorporating a dopant adapted to be excited by an exciting radiation having a predetermined wavelength, and a long-period diffraction grating (5) inscribed in the said optical fibre (4).

3.  Amplifier according to Claim 2, characterized in that it comprises an excitation source (6) capable of generating the said exciting radiation, an optical coupler (7) optically connecting the said excitation source (6) to the said optical fibre (4), and a device (8) for controlling the said excitation source (6), capable of controlling the power of the said exciting radiation.

4.  Amplifier according to Claim 2 or 3, characterized in that the said long-period grating (5) has a grating period in the range from 100 μm to 800 μm.

5.  Amplifier according to any of Claims 2 to 4, characterized in that the said long-period grating (5) has a grating period in the range from 150 μm to 600 μm.

6.  Amplifier according to any of Claims 2 to 5, characterized in that the said filter (1) has a loss peak which, when the said optical fibre (4) is excited by the said exciting radiation with an optical power in excess of a predetermined power, undergoes a wavelength displacement of at least 3 nm.

7.  Amplifier according to any of Claims 2 to 6, characterized in that the said dopant is a rare earth.

8.  Amplifier according to any of Claims 2 to 7, characterized in that the said dopant is Yb.

9.  Tunable optical filter, comprising an optical fibre (4) incorporating a dopant adapted to be excited by an exciting radiation having a predetermined wavelength, and a long-period diffraction grating (5) inscribed in the said optical fibre (4), characterized in that the said grating (5) is a long-period grating.

10. Filter according to Claim 9, characterized in that it also comprises an excitation source (6) capable of generating the said exciting radiation, an optical coupler (7) optically connecting the said excitation source (6) to the said optical fibre (4), and a device (8) for controlling the said excitation source (6), capable of controlling the power of the said exciting radiation.

**11.** Filter according to Claim 9 or 10, characterized in that the said long-period grating (5) has a grating period in the range from 100 μm to 800 μm.

**12.** Filter according to Claim 9 or 10, characterized in that the said long-period grating (5) has a grating period in the range from 150 μm to 600 μm.

**13.** Filter according to any of Claims 9 to 12, characterized in that it has a loss peak which, when the said optical fibre (4) is excited by the said exciting radiation with an optical power in excess of a predetermined power, undergoes a wavelength displacement of at least 3 nm.

**14.** Filter according to any of Claims 9 to 13, characterized in that the said dopant is a rare earth.

**15.** Filter according to Claim 14, characterized in that the said rare earth is Yb.

**16.** Filter according to any of Claims 9 to 15, characterized in that the said optical fibre (4) is doped with Al and P.

**17.** Method for wavelength filtering an optical signal, comprising the phases of:

- feeding the said signal to a portion of optical fibre incorporating a dopant adapted to be excited by an exciting radiation with a predetermined wavelength, the said portion of fibre having a refractive index correlated with the state of excitation of the said dopant; and
- filtering, in the said portion of fibre, one wavelength of the said signal;

characterized in that the said filtering phase comprises the phase of causing, in the said portion of fibre, the generation of higher-order modes of the said optical signal at the said wavelength, starting from the said fundamental mode.

**18.** Method according to Claim 17, characterized in that it comprises the additional phase of exciting the said dopant to induce a change of the said refractive index, and consequently a change in the said filtered wavelength.

**19.** Method according to Claim 18, characterized in that the said change in the said filtered wavelength, when the said fibre is excited by an optical power greater than a predetermined power, is at least 3 nm.

**20.** Method according to any of Claims 17 to 19, characterized in that the said phase of filtering a wavelength of the said signal comprises the phase of diffracting the said signal with a spatial periodicity in the range from 100 μm to 800 μm.

**21.** Method according to any of Claims 17 to 19, characterized in that the said phase of filtering a wavelength of the said signal comprises the phase of diffracting the said signal with a spatial periodicity in the range from 150 μm to 600 μm.

**22.** Method according to any of Claims 17 to 21, characterized in that the said dopant is Yb.

**Fig. 1**

**Fig. 2**

**Fig.3**

Fig. 4

Fig. 5

Fig. 6

Fig. 7

Trend at 133 Hz

Fig.8

Trend at 2Hz

Fig. 9

**European Patent Office**

## EUROPEAN SEARCH REPORT

Application Number

EP 00 10 4793

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | VENGSARKAR A M ET AL: "LONG-PERIOD FIBER GRATINGS AS BAND-REJECTION FILTERS" JOURNAL OF LIGHTWAVE TECHNOLOGY, vol. 14, no. 1, 1 January 1996 (1996-01-01), pages 58-65, XP000585243 ISSN: 0733-8724 * abstract * * page 58 * * figure 2 * | 1-5, 7-12,14, 15,17, 18,20-22 | H04B10/17 H01S3/06 G02F1/35 G02B6/16 |
| D,Y | JANOS M ET AL: "LOW POWER NONLINEAR RESPONSE OF YB3+-DOPED OPTICAL FIBRE BRAGG GRATINGS" ELECTRONICS LETTERS, vol. 33, no. 25, 4 December 1997 (1997-12-04), page 2150/2151 XP000773589 ISSN: 0013-5194 * the whole document * | 1-5, 7-12,14, 15,17, 18,20-22 | |
| A | GB 2 246 234 A (UNIV SOUTHAMPTON) 22 January 1992 (1992-01-22) * abstract * * page 5, line 33 - line 35 * * page 7, line 23 - page 8, line 4 * * page 8, line 20 - line 35 * * page 9, line 5 - line 8 * * page 9 * | 1,2,9,17 | TECHNICAL FIELDS SEARCHED (Int.Cl.7)  H04B H01S G02F G02B |
| A | PATENT ABSTRACTS OF JAPAN vol. 098, no. 008, 30 June 1998 (1998-06-30) & JP 10 062828 A (MATSUSHITA ELECTRIC IND CO LTD), 6 March 1998 (1998-03-06) * abstract * | 1,2,9,17 | |

-/--

The present search report has been drawn up for all claims

| Place of search | Date of completion of the search | Examiner |
|---|---|---|
| THE HAGUE | 22 June 2000 | Ribbe, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 00 10 4793

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 647 039 A (JUDKINS JUSTIN BOYD ET AL) 8 July 1997 (1997-07-08) <br> * abstract * <br> * column 2, line 24 - line 65 * <br> * column 3, line 10 - line 14 * | 1,2,9,17 | |

TECHNICAL FIELDS SEARCHED (Int.Cl.7)

The present search report has been drawn up for all claims

| Place of search | Date of completion of the search | Examiner |
|---|---|---|
| THE HAGUE | 22 June 2000 | Ribbe, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 00 10 4793

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2000

| Patent document cited in search report | | Publication date | Patent family member(s) | | Publication date |
|---|---|---|---|---|---|
| GB 2246234 | A | 22-01-1992 | AT | 133517 T | 15-02-1996 |
| | | | DE | 69116691 D | 07-03-1996 |
| | | | EP | 0535002 A | 07-04-1993 |
| | | | ES | 2084815 T | 16-05-1996 |
| | | | WO | 9118434 A | 28-11-1991 |
| | | | US | 5260823 A | 09-11-1993 |
| JP 10062828 | A | 06-03-1998 | NONE | | |
| US 5647039 | A | 08-07-1997 | NONE | | |

EPO FORM P0459

For more details about this annex : see Official Journal of the European Patent Office, No. 12/82